# EUROPEAN PATENT APPLICATION

(11) **EP 3 989 652 A1**
(43) Date of publication of application: **27.04.2022**
(21) Application number: 21838968.2
(22) Date of filing: 24.08.2021
(51) Int. Cl.: H04W 56/00, H04W 88/08

(54) **WIRELESS NODE, COMMUNICATION SYSTEM, METHOD, PROGRAM, AND RECORDING MEDIUM**

(30) Priority: 31.08.2020 JP 2020145918
(71) Applicant: NEC Corporation, Tokyo 108-8001 (JP); NEC Platforms, Ltd., Kawasaki-shi, Kanagawa 213-8511 (JP)
(72) Inventor: NAKATA, Atsushi, Tokyo 108-8001 (JP); NAKAGAWA, Takashi, Kawasaki-shi, Kanagawa 213-8511 (JP); NAKAYASU, Kanada, Tokyo 108-8001 (JP)
(74) Representative: MacDougall, Alan John Shaw
(86) International application number: PCT/JP2021/031019
(87) International publication number: WO 2022/045145

(57) **Abstract**

In order to execute processing relating to synchronization based on a synchronization signal, a radio node 200 includes: a first processing section 211 configured to receive a synchronization signal transmitted from a first node 100; and a second processing section 212 configured to generate a reference signal by using a time signal acquired from a time signal source, and execute processing relating to synchronization in accordance with a comparison result based on the synchronization signal and the reference signal.

## Description

### BACKGROUND

### Technical Field

The present invention relates to a radio node, a communication system, a method, a program, and a recording medium.

### Background Art

In recent years, regarding a radio access network (RAN), architecture in which a baseband processing section and a radio section in a base station apparatus are separately provided has been proposed.

For example, Non Patent Literature 1 presented by Open RAN (O-RAN) Alliance discloses an O-RAN Distributed Unit (O-DU) functioning as a baseband processing section and an O-RAN Radio Unit (O-RU) functioning as a radio section.

Non Patent Literature 1 illustrates a configuration of a control plane, a user plane, and a synchronization plane (C plane, U plane, and S plane) of O-RAN fronthaul specifications. Note that, in the Specification, the C plane, the U plane, and the S plane may be collectively referred to as a CUS plane.

### Citation List

### Non Patent Literature

[NPL 1] O-RAN.WG4.CUS.0-v03.00, O-RAN Fronthaul Working Group 4, "Control, User and Synchronization Plane Specification" (2020.03.13)

### SUMMARY

### Technical Problem

When the O-DU executes radio communication with a User Equipment (UE) via the O-RU, high synchronization accuracy and appropriate delay management are required between apparatuses. However, accuracy of a synchronization signal generated by the O-DU based on a reference signal may deteriorate before the O-RU receives the synchronization signal. The issue described above may occur similarly in other radio access networks having a similar configuration.

In the light of the circumstances described above, the present invention has an example object to provide a radio node, a communication system, a method, a program, and a recording medium that can appropriately execute processing relating to synchronization, based on a synchronization signal.

### Solution to Problem

According to an example aspect of the present invention, there is provided a radio node including a first processing section configured to receive a synchronization signal transmitted from a first node; and, a second processing section configured to generate a reference signal by using a time signal acquired from a time signal source, and execute processing relating to synchronization in accordance with a comparison result based on the synchronization signal and the reference signal.

According to an example aspect of the present invention, there is provided a communication system including: a first node configured to transmit a synchronization signal; a radio node including a first processing section configured to receive the synchronization signal, and a second processing section configured to generate a reference signal by using a time signal acquired from a time signal source, and execute processing relating to synchronization in accordance with a comparison result based on the synchronization signal and the reference signal; and a second node configured to be deployed in a subsequent stage of the radio node.

According to an example aspect of the present invention, there is provided a method including receiving a synchronization signal transmitted from a first node, generating a reference signal by using a time signal acquired from a time signal source, and executing processing relating to synchronization in accordance with a comparison result based on the synchronization signal and the reference signal.

According to an example aspect of the present invention, there is provided a program causing a computer to function as a radio node. The radio node includes a first processing section configured to receive a synchronization signal transmitted from a first node, and a second processing section configured to generate a reference signal by using a time signal acquired from a time signal source, and execute processing relating to synchronization in accordance with a comparison result based on the synchronization signal and the reference signal.

According to an example aspect of the present invention, there is provided a non-transitory computer readable recording medium recording a program thereon, the program causing a computer to function as a radio node. The radio node includes a first processing section configured to receive a synchronization signal transmitted from a first node, and a second processing section configured to generate a reference signal by using a time signal acquired from a time signal source, and execute processing relating to synchronization in accordance with a comparison result based on the synchronization signal and the reference signal.

### Advantageous Effects of Invention

According to the present invention, processing relating to synchronization can be appropriately executed based on a synchronization signal. Note that, according to the present invention, instead of or together with the above effects, other effects may be exerted.

### BRIEF DESCRIPTION OF THE DRAWINGS

Fig. 1 is an explanatory diagram illustrating a schematic configuration of a radio access network R according to a first example embodiment of the present invention;
Fig. 2 is an explanatory diagram illustrating a schematic configuration of a communication system S1 according to the first example embodiment of the present invention;
Fig. 3 is an explanatory diagram illustrating a protocol stack in the communication system S1 according to the first example embodiment of the present invention;
Fig. 4 is an explanatory diagram illustrating topology (C1) of an S plane in the communication system S1 according to the first example embodiment of the present invention;
Fig. 5 is an explanatory diagram illustrating topology (C2) of the S plane in the communication system S1 according to the first example embodiment of the present invention;
Fig. 6 is an explanatory diagram illustrating topology (C4) of the S plane in the communication system S1 according to the first example embodiment of the present invention;
Fig. 7 is a block diagram illustrating a schematic hardware configuration of an FHA 200 according to the first example embodiment of the present invention;
Fig. 8 is a block diagram illustrating a schematic functional configuration of the FHA 200 according to the first example embodiment of the present invention;
Fig. 9 is a flowchart illustrating a first operation example in the FHA 200 according to the first example embodiment of the present invention;
Fig. 10 is a conceptual diagram of the first operation example in the FHA 200 according to the first example embodiment of the present invention;
Fig. 11 is a flowchart illustrating a second operation example in the FHA 200 according to the first example embodiment of the present invention;
Fig. 12 is a conceptual diagram of the second operation example in the FHA 200 according to the first example embodiment of the present invention;
Fig. 13 is an explanatory diagram illustrating a schematic configuration of a communication system S2 according to a second example embodiment of the present invention;
Fig. 14 is a block diagram illustrating a schematic hardware configuration of an FHM 310 according to the second example embodiment of the present invention;
Fig. 15 is a block diagram illustrating a schematic functional configuration of the FHM 310 according to the second example embodiment of the present invention;
Fig. 16 is an explanatory diagram illustrating a PTP configuration and a SyncE configuration stored in the FHM 310 according to the second example embodiment of the present invention;
Fig. 17 is a flowchart illustrating a first operation example in the FHM 310 according to the second example embodiment of the present invention;
Fig. 18 is an explanatory diagram illustrating a GNSS configuration stored in the FHM 310 executing the first operation example according to the present invention;
Fig. 19 is a flowchart illustrating a second operation example in the FHM 310 according to the second example embodiment of the present invention;
Fig. 20 is an explanatory diagram illustrating an adjustment configuration stored in the FHM 310 executing the second operation example according to the present invention;
Fig. 21 is an explanatory diagram illustrating a schematic configuration of the communication system S2 according to an example alteration of the second example embodiment of the present invention;
Fig. 22 is a block diagram illustrating a schematic configuration of a communication system Sa according to a third example embodiment of the present invention; and
Fig. 23 is a block diagram illustrating a schematic configuration of a radio node MN according to the third example embodiment of the present invention.

### DESCRIPTION OF THE EXAMPLE EMBODIMENTS

Hereinafter, example embodiments of the present invention will be described in detail with reference to the accompanying drawings. Note that, in the Specification and drawings, elements to which similar descriptions are applicable are denoted by the same reference signs, and overlapping descriptions may hence be omitted.

Each example embodiment described below is merely examples of configurations for enabling implementation of the present invention. Each example embodiment described below can be modified or changed as appropriate according to configurations and various conditions of an apparatus to which the present invention is applied. Not necessarily all of the combinations of elements included in each example embodiment described below are essential for implementation of the present invention, and a part of the elements can be omitted as appropriate. Thus, the scope of the present invention is not limited to the configurations described in each example embodiment described below. Configurations obtained by combining a plurality of configurations described in the example embodiments can also be adopted as far as there is no inconsistency.

The description according to the present invention is provided in the following order.
1. Overview of Example Embodiment of Present Invention
2. First Example Embodiment
   2.1. Configuration of Communication System S1
   2.2. Configuration of FHA 200
   2.3. Operation Examples
      2.3.1. First Operation Example
      2.3.2. Second Operation Example
   2.4. Example Alterations
3. Second Example Embodiment
   3.1. Configuration of Communication System S2
   3.2. Configuration of FHM 310
   3.3. Operation Examples
      3.3.1. First Operation Example
      3.3.2. Second Operation Example
   3.4. Example Alterations
4. Third Example Embodiment
   4.1. Configuration of Communication System Sa
   4.2. Configuration of Radio Node MN
5. Other Example Embodiments

### <<1. Overview of Example Embodiment of Present Invention>>

First, an overview of the example embodiment of the present invention will be described.

### (1) Technical Issues

In recent years, regarding a radio access network (RAN), architecture in which a baseband processing section and a radio section in a base station apparatus are separately provided has been proposed.

For example, Reference Literature 1 presented by Open RAN (O-RAN) Alliance discloses an O-RAN Distributed Unit (O-DU) functioning as a baseband processing section and an O-RAN Radio Unit (O-RU) functioning as a radio section. Reference Literature 1 illustrates a configuration of a control plane, a user plane, and a synchronization plane (C plane, U plane, and S plane) of O-RAN fronthaul specifications.

<Reference Literature 1> O-RAN.WG4.CUS.0-v03.00, O-RAN Fronthaul Working Group 4, "Control, User and Synchronization Plane Specification" (2020.03.13)

When the O-DU executes radio communication with a User Equipment (UE) via the O-RU, high synchronization accuracy and appropriate delay management are required between apparatuses. However, accuracy of a synchronization signal generated by the O-DU based on a reference signal may deteriorate before the O-RU receives the synchronization signal. The issue described above may occur similarly in other radio access networks having a similar configuration.

In the light of the circumstances described above, the present example embodiment has an example object to enable appropriate execution of processing relating to synchronization, based on a synchronization signal.

### (2) Technical Features

In an example embodiment according to the present invention, a radio node includes: a first processing section configured to receive a synchronization signal transmitted from a first node; and a second processing section configured to generate a reference signal by using a time signal acquired from a time signal source, and execute processing relating to synchronization in accordance with a comparison result based on the synchronization signal and the reference signal.

According to the configuration described above, processing relating to synchronization can be appropriately executed based on a synchronization signal.

Note that, according to the present example embodiments, instead of or together with the above effects, other effects may be exerted. Note that the technical features described above are a specific example of the example embodiments according to the present invention, and as a matter of course, the example embodiments according to the present invention are not limited to the technical features described above.

### <<2. First Example Embodiment>>

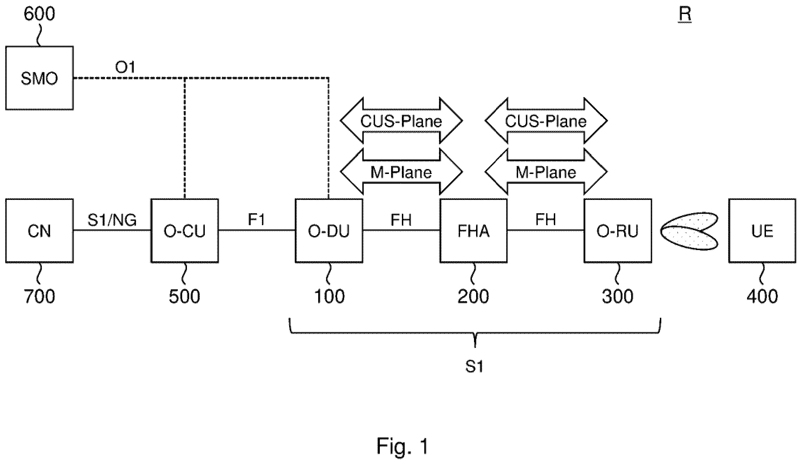

Next, with reference to Fig. 1 to Fig. 12, a first example embodiment of the present invention will be described.

### <<2.1. Configuration of Communication System S1>>

Fig. 1 is an explanatory diagram illustrating a schematic configuration of a radio access network R according to the first example embodiment. As illustrated in Fig. 1, the radio access network R includes an O-RAN Distributed Unit (O-DU) 100, a Fronthaul Analyzer (FHA) 200, an O-RAN Radio Unit (O-RU) 300, a User Equipment (UE) 400, an O-RAN Centralized Unit (O-CU) 500, a Service Management Orchestrator (SMO) 600, and a Core Network (CN) 700.

The radio access network R according to the first example embodiment conforms to technical specifications of the Third Generation Partnership Project (3GPP). Further, at least the O-DU 100, the FHA 200, the O-RU 300, the O-CU 500, and the SMO 600 conform to technical specifications of the O-RAN Alliance.

As illustrated in Fig. 1, the O-DU 100 and the O-RU 300 are connected via a fronthaul FH. The O-DU 100 mainly performs baseband processing. The FHA 200 may be an apparatus that is mainly used for testing (inspection) of the communication system S1, and may be deployed between the O-DU 100 and the O-RU 300. In other words, the FHA 200 may be an intermediate node (radio node) for the O-DU 100 and the O-RU 300. The O-RU 300 mainly performs radio communication with the UE 400.

In the radio access network R according to the first example embodiment, the FHA 200 terminates the CUS plane and an M plane (management plane). In other words, the FHA 200 can merely transfer but also process (for example, analyze) a CUS plane signal and an M plane signal.

The FHA 200 can artificially operate as the O-RU for the O-DU 100, and can artificially operate as the O-DU for the O-RU 300. In other words, the O-DU 100 and the O-RU 300 can communicate with each other without recognizing the FHA 200. In addition, the FHA 200 can process the CUS plane signal and the M plane signal transmitted and received to and from the O-DU 100 and the O-RU 300.

More specifically, for example, the FHA 200 can establish secure connection (for example, Secure Shell (SSH) connection) for each of the O-DU 100 and the O-RU 300.

The O-DU 100 and the O-CU 500 are connected via an F1 interface. The O-CU 500 and the CN 700 are connected via an S1/NG interface. The SMO 600 connects to the O-DU 100 and the O-CU 500 via an O1 interface and controls the O-DU 100 and the O-CU 500. Note that the SMO 600 may further connects to the O-RU 300 and control the O-RU 300. The CN 700 includes a plurality of core network nodes (network functions) such as the Access and Mobility Management Function (AMF) and the User Plane Function (UPF).

Note that the term and the configuration of each apparatus in the Specification are non-restrictive examples, and each apparatus may be given any term, and may have any configuration that enables implementation of the present invention.

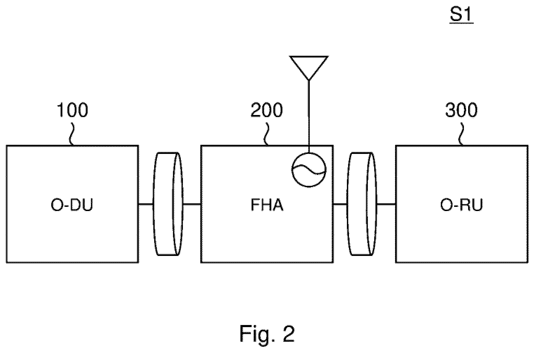

Fig. 2 is an explanatory diagram illustrating a schematic configuration of the communication system S1 according to the first example embodiment. The communication system S1 is included in the radio access network R. The communication system S1 includes the O-DU 100, the FHA 200, and the O-RU 300. Each of the O-DU 100, the FHA 200, and the O-RU 300 may be referred to as a node, a communication node, or a RAN node.

In Fig. 2, for the sake of simplicity, only one O-DU 100, one FHA 200, and one O-RU 300 are illustrated. However, the communication system S1 may include a plurality of O-DUs 100, a plurality of FHAs 200, and a plurality of O-RUs 300.

The O-DU 100 transmits and receives a signal of each plane (C plane, U plane, S plane, and M plane) to and from the O-RU 300. In particular, the O-DU 100 can transmit a first synchronization signal on the S plane. The first synchronization signal may be a Precision Time Protocol (PTP) signal in conformity to recommendations of the Institute of Electrical and Electronics Engineers (IEEE) 1588, may be a Synchronous Ethernet (SyncE) signal in conformity to recommendations of the International Telecommunication Union - Telecommunication Standardization Sector (ITU-T) G.8260, or may be a synchronization signal in conformity to other specifications and standards.

A signal transmitted from the O-DU 100 to the O-RU 300 is received by the FHA 200. The FHA 200 can perform transmission processing for the O-RU 300, based on the received signal. For example, the FHA 200 can transmit a second synchronization signal to the O-RU 300, based on the first synchronization signal received from the O-DU 100. Similarly to the first synchronization signal, the second synchronization signal may be a PTP signal in conformity to recommendations of IEEE 1588, may be a SyncE signal in conformity to recommendations of ITU-T G.8260, or may be a synchronization signal in conformity to other specifications and standards.

The FHA 200 may have only a PTP function, may have only a SyncE function, or may have both of the PTP function and the SyncE function. In other words, the FHA 200 has one or more types of certain synchronization functions.

The FHA 200 can transfer the signal received from the O-DU 100 to the O-RU 300, and can generate a new signal by using the signal received from the O-DU 100 and transmit the new signal to the O-RU 300.

In addition, the FHA 200 can analyze the first synchronization signal received from the O-DU 100 for output. For example, the FHA 200 can output quantitative or qualitative information indicating fluctuation and/or validity of the first synchronization signal.

The O-RU 300 performs radio communication with the UE 400, in accordance with a synchronization signal supplied from the O-DU 100 (FHA 200).

Regarding synchronization processing (for example, PTP processing and/or SyncE processing) on the S plane, the O-DU 100 functions as a master (upper node, control node) for the FHA 200 being a slave (lower node, controlled node). Similarly, the FHA 200 functions as a master for the O-RU 300 being a slave.

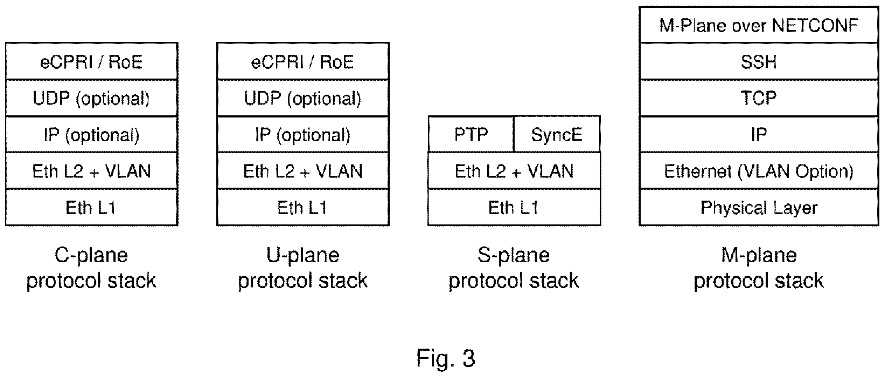

Fig. 3 is an explanatory diagram illustrating a protocol stack in the communication system S1 according to the first example embodiment. Layers on the lower side of the figure represent lower layers, and layers on the upper side of the figure represent higher layers. In the communication system S1, signals on the C plane, the U plane, the S plane, and the M plane are transmitted and received.

The protocol stack of the C plane, the U plane, and the S plane conforms to Chapter 3.2 of Reference Literature 1 described above. The stack of the M plane conforms to Chapter 2.2 of Reference Literature 2 below.

<Reference Literature 2> O-RAN.WG4.MP.0-v03.00, O-RAN Fronthaul Working Group 4, "Management Plane Specification" (2020.04.17)

The C plane supports the protocol used for transmission of a control signal. The U plane supports the protocol used for transmission of a user signal. The control signal and the user signal are used in the enhanced Common Public Radio Interface (eCPRI) and/or Radio over Ethernet (RoE). Each of the control signal and the user signal includes information (time information allocated to a radio frame, a subframe, a slot, and a symbol) indicating time resources to be used for transmission and reception.

The S plane supports the protocol used for transmission of a signal (for example, a PTP signal, or a SyncE signal) relating to synchronization control. The M plane supports the protocol used for transmission of a signal (for example, a signal used in the network configuration protocol (NETCONF)) used for monitoring and maintenance of the network node.

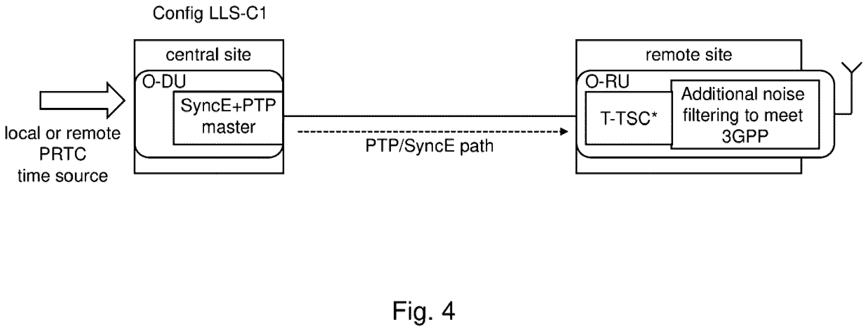

Fig. 4 to Fig. 6 are each an explanatory diagram illustrating topology of the S plane in the communication system S1 according to the first example embodiment. The topology of the S plane according to the present example embodiment conforms to Chapter 9.2.2 (in particular, C1, C2, and C4) of Reference Literature 1. Note that the present example embodiment may be applied to C3 topology.

Fig. 4 is an explanatory diagram illustrating C1 topology. As illustrated in Fig. 4, in C1 topology, the O-DU 100 and the O-RU 300 are directly connected to each other. Note that, in C1 topology, the FHA 200 may be deployed between the O-DU 100 and the O-RU 300.

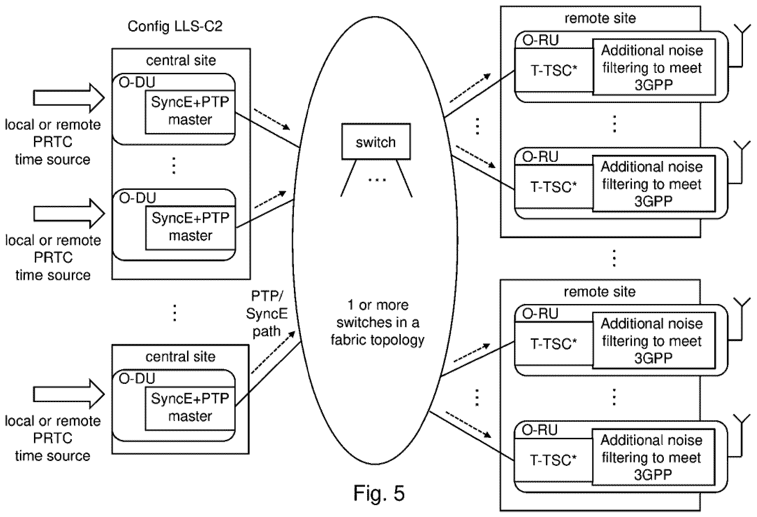

Fig. 5 is an explanatory diagram illustrating C2 topology. As illustrated in Fig. 5, in C2 topology, a switch network including one or more switches is deployed between a plurality of O-DUs 100 and a plurality of O-RUs 300. In C2 topology, the FHA 200 is deployed in the switch network.

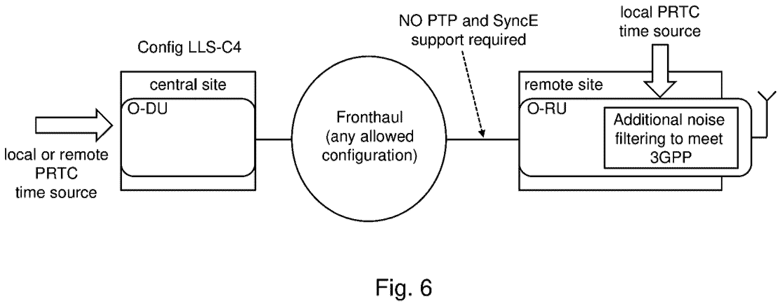

Fig. 6 is an explanatory diagram illustrating C4 topology. As illustrated in Fig. 6, in C1 topology, the O-DU 100 and the O-RU 300 are directly connected. However, a synchronization signal (for example, a PTP signal and/or a SyncE signal) is not supplied from the O-DU 100 to the O-RU 300. In C4 topology, the FHA 200 may be deployed between the O-DU 100 and the O-RU 300. The FHA 200 may function as a synchronization source (local PRTC time resource in the figure) for the O-RU 300.

In the present example embodiment, the FHA 200 operates to constitute C4 topology and C1/C2 topology. In particular, for the O-RU 300, the FHA 200 operates to constitute C1/C2 topology.

### <<2.2. Configuration of FHA 200>>

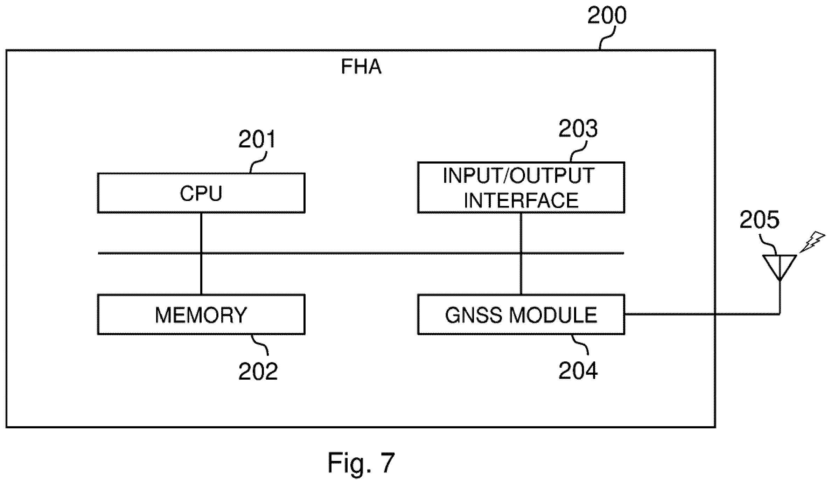

Fig. 7 is a block diagram illustrating a schematic hardware configuration of the FHA 200 according to the first example embodiment. As illustrated in Fig. 7, the FHA 200 includes a central processing unit (CPU) 201, a memory 202, an input/output interface 203, a Global Navigation Satellite System (GNSS) module 204, and an antenna 205. The above-described elements provided in the FHA 200 are connected to each other with an internal bus. Note that the FHA 200 may include a hardware element other than the elements illustrated in Fig. 7.

The CPU 201 is an arithmetic element that implements various functions of the FHA 200. The memory 202 includes a storage medium such as an auxiliary storage apparatus, such as a random access memory (RAM), a read only memory (ROM), and a hard disk drive (HDD).

The memory 202 is an element that temporarily or permanently stores programs (commands) and pieces of data used to execute various types of processing in the FHA 200. The program includes one or more commands for operation of the FHA 200. The CPU 201 develops, on the memory 202 and/or a system memory (not illustrated), the program stored in the memory 202 to execute the program, and thereby implements the function of the FHA 200.

The input/output interface 203 is an interface that receives operation on the FHA 200 performed by an operator (for example, a maintenance worker for the communication system S1) and supplies the operation input to the CPU 201, and also presents various pieces of information.

The GNSS module 204 receives signals (GNSS signals) broadcast from GNSS satellites via the antenna 205, acquires a high-accuracy time signal based on the GNSS signals (time signal sources), and outputs the acquired high-accuracy time signal. Note that "GNSS" in the Specification is a general term for a satellite positioning system including the Global Positioning System (GPS), the Global Navigation Satellite System (GLONASS), Galileo, Compass, or the Quasi Zenith Satellite System (QZSS), for example.

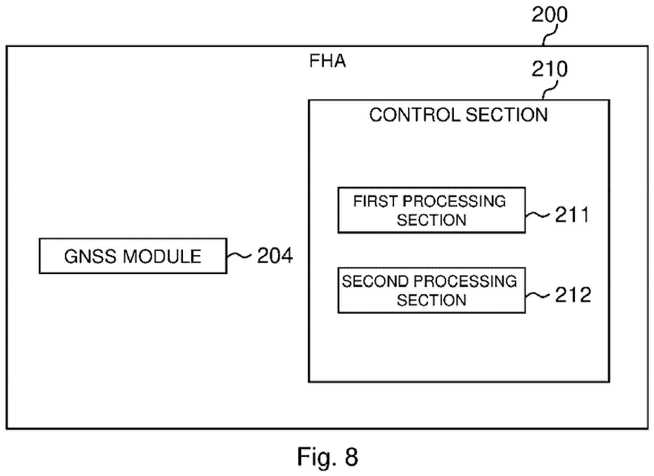

Fig. 8 is a block diagram illustrating a schematic functional configuration of the FHA 200 according to the first example embodiment. As illustrated in Fig. 8, the FHA 200 includes a control section 210 including a first processing section 211 and a second processing section 212. The GNSS module 204 supplies the above-described time signal to the control section 210. The control section 210, the first processing section 211, and the second processing section 212 are each a function block that is implemented when, as described above, the CPU 201 executes the program stored in the memory 202. Note that the control section 210 may further include a constituent element other than the above-described function blocks. In other words, the control section 210 can execute operations other than the operations of the above-described function blocks.

The above-described function blocks (the control section 210, the first processing section 211, and the second processing section 212) may be implemented by a semiconductor chip by means of hardware. In other words, the above-described function blocks may be implemented by software, or may be implemented by hardware.

The first processing section 211 is a function block that provides a function to enable operation of the FHA 200 as a slave for the O-DU 100 being a master. The first processing section 211 receives a synchronization signal (first synchronization signal) transmitted by the O-DU 100 (first node). The first processing section 211 can restore a reference signal (first reference signal) by using the above-described synchronization signal (first synchronization signal). The reference signal is a signal used by an apparatus functioning as a master to generate the synchronization signal, and is a time pulse such as 1 pulse per second (PPS), for example. The first reference signal may be a reference signal used when a master apparatus located on the upstream side with respect to the O-DU 100 generates the first synchronization signal. Accuracy (precision) of the restored first reference signal depends on accuracy of the synchronization signal (first synchronization signal) used for the restoration. When the accuracy of the first synchronization signal is low, the accuracy of the restored first reference signal is low as well.

The second processing section 212 is a function block that provides a function to enable operation of the FHA 200 as a master for the O-RU 300 being a slave. The second processing section 212 can generate a reference signal (second reference signal) by using a time signal (in other words, a time signal acquired from time signal source) supplied from the GNSS module 204. The reference signal (second reference signal) generated by the second processing section 212 may be different from the reference signal (first reference signal) restored by the first processing section 211.

The second processing section 212 can evaluate the synchronization signal (first synchronization signal) received by the first processing section 211, in accordance with a comparison result obtained by comparing the first reference signal and the second reference signal. An evaluation result acquired through the above-described evaluation may be information indicating fluctuation and/or validity of the synchronization signal (first synchronization signal).

The second processing section 212 can generate a new synchronization signal (second synchronization signal), based on the evaluation result obtained by evaluating the first synchronization signal, and transmit the generated synchronization signal (second synchronization signal) to the O-RU 300 (second node). Note that it is preferable that the second processing section 212 generate the synchronization signal (second synchronization signal) by using another signal (for example, a C plane signal and/or a U plane signal) received from the O-DU 100 in addition to the evaluation result described above.

In addition, the second processing section 212 can transfer the synchronization signal (first synchronization signal) received by the first processing section 211 to the O-RU 300 (second node), based on timing indicated by the reference signal (second reference signal) that is generated using the time signal. The synchronization signal may include synchronization accuracy information indicating synchronization accuracy of the synchronization signal. The synchronization accuracy information is, for example, a clock class in PTP and/or an SSM in SyncE. The synchronization accuracy information can have a value corresponding to a synchronization state, such as "a synchronization signal is in synchronization with Coordinated Universal Time (UTC)", "in a hold over state", and "out of synchronization".

The second processing section 212 can change the synchronization accuracy information, based on the synchronization signal (in other words, synchronization signal (second synchronization signal) adjusted using a reference signal (second reference signal)) whose transfer timing is adjusted based on timing indicated by the second reference signal. For example, when the second processing section 212 performs an adjustment using the second reference signal to improve the synchronization accuracy of the first synchronization signal, the second processing section 212 can change the synchronization accuracy information to a value indicating that the synchronization accuracy is higher.

The second processing section 212 may disable at least one of the PTP processing and the SyncE processing. The second processing section 212 may change the synchronization accuracy information to a value indicating that the synchronization accuracy is lower than actual synchronization accuracy, based on a predetermined trigger (for example, user operation performed via the input/output interface 203).

The FHA 200 may be virtualized. In other words, the FHA 200 may be implemented as a virtual machine. In the case described above, the FHA 200 (virtual machine) may operate as a physical machine (hardware) including a processor, a memory, and the like, and a virtual machine on a hypervisor.

### <<2.3. Operation Examples>>

### <<2.3.1. First Operation Example>>

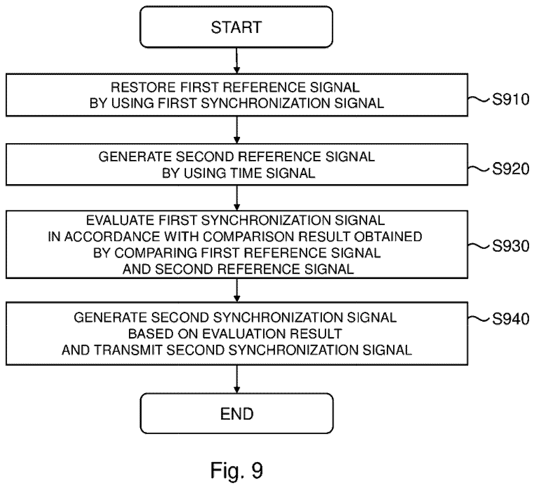

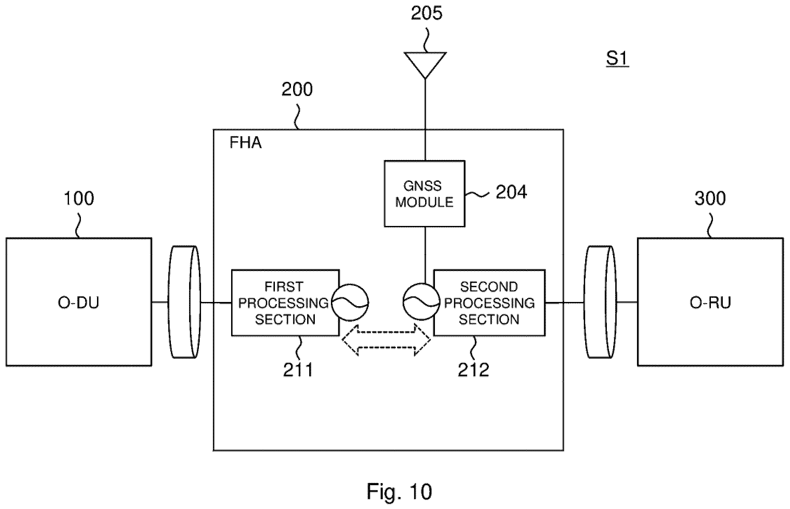

Fig. 9 is a flowchart illustrating a first operation example in the FHA 200 according to the first example embodiment. Fig. 10 is a conceptual diagram of the first operation example in the FHA 200 according to the first example embodiment. The first operation example illustrates a configuration in which the second processing section 212 evaluates the first synchronization signal, in accordance with the comparison result obtained by comparing the first reference signal and the second reference signal.

In Step S910, the first processing section 211 restores the first reference signal by using the first synchronization signal received from the O-DU 100 (first node). The first synchronization signal may be a PTP signal, may be a SyncE signal, or may be a combination of these.

In Step S920, the second processing section 212 generates a second reference signal by using the time signal supplied from the GNSS module 204 based on the GNSS signal.

In Step S930, the second processing section 212 evaluates the first synchronization signal, in accordance with the comparison result obtained by comparing the first reference signal and the second reference signal. The above-described first reference signal is a signal restored (reproduced) based on the first synchronization signal, and thus indicates accuracy of the first synchronization signal. The above-described second reference signal is a signal generated based on the GNSS being a high-accuracy synchronization source, and thus has high accuracy in principle. Thus, by comparing the first reference signal and the second reference signal and measuring how much the first reference signal is deviated with respect to the second reference signal, the first reference signal and also the first synchronization signal can be evaluated.

In Step S940, the second processing section 212 generate a second synchronization signal, based on an evaluation result obtained by evaluating the first synchronization signal, and transmits the second synchronization signal to the O-RU 300 (second node). Note that the second processing section 212 may display the evaluation result on the input/output interface 203, without executing the generation and the transmission of the second synchronization signal.

According to the configuration described above, the FHA 200 being a radio node can appropriately execute processing relating to synchronization based on a synchronization signal. More specifically, the FHA 200 can evaluate the first synchronization signal, in accordance with the comparison result between the first synchronization signal restored using the first synchronization signal transmitted from the O-DU 100 and the second reference signal generated using the time signal supplied from the GNSS module 204 based on the GNSS signal. Based on the evaluation result of the first synchronization signal, the FHA 200 can generate the second synchronization signal having higher accuracy and transmit the second synchronization signal to the O-RU 300. Therefore, even when accuracy of the first synchronization signal is low, synchronization accuracy in the O-RU 300 can be enhanced.

### <<2.3.2. Second Operation Example>>

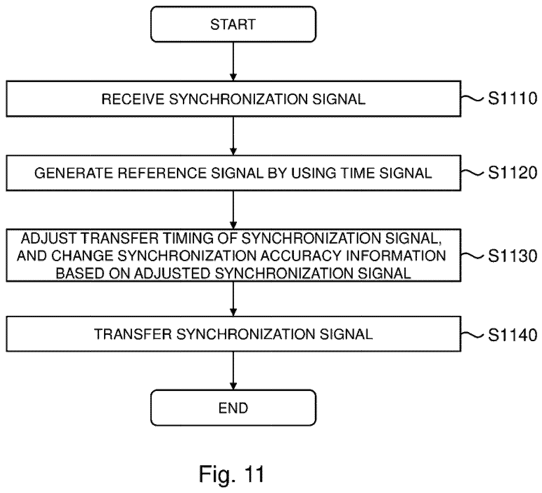

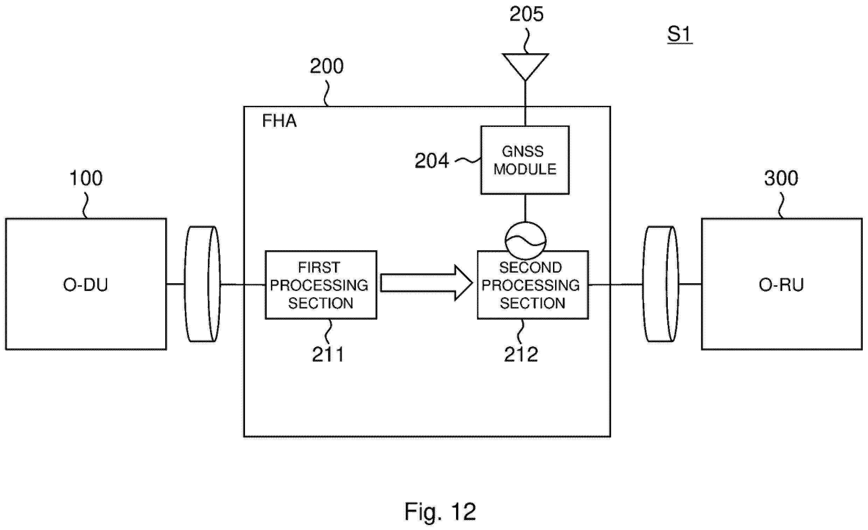

Fig. 11 is a flowchart illustrating a second operation example in the FHA 200 according to the first example embodiment. Fig. 12 is a conceptual diagram of the second operation example in the FHA 200 according to the first example embodiment. The second operation example illustrates a configuration in which the second processing section 212 transfers the synchronization signal received by the first processing section 211 to the second node, based on the timing indicated by a reference signal.

In Step S1110, the first processing section 211 receives the synchronization signal transmitted by the O-DU 100 (first node), and supplies the synchronization signal to the second processing section 212. The synchronization signal may be a PTP signal, may be a SyncE signal, or may be a combination of these.

In Step S1120, the second processing section 212 generates a reference signal by using the time signal supplied from the GNSS module 204 based on the GNSS signal.

In Step S1130, the second processing section 212 adjusts transfer timing of the synchronization signal, based on the timing indicated by the reference signal. In addition, the second processing section 212 changes the synchronization accuracy information, based on the synchronization signal adjusted using the reference signal as described above. For example, when the second processing section 212 performs an adjustment using the reference signal to improve the synchronization accuracy (for example, "out of synchronization") of the synchronization signal, the second processing section 212 changes the synchronization accuracy information to a value (for example, a value indicating "in synchronization with UTC") indicating that the synchronization accuracy is higher.

In Step S1140, the second processing section 212 transfers the synchronization signal adjusted based on the timing indicated by the reference signal in Step S1130 to the O-RU 300 (second node).

According to the configuration described above, the FHA 200 being a radio node can appropriately execute processing relating to synchronization based on a synchronization signal. More specifically, the FHA 200 can adjust the transfer timing of the synchronization signal transmitted from the O-DU 100, based on the timing of the reference signal generated using the time signal supplied from the GNSS module 204 based on the GNSS signal. As a result, the synchronization signal adjusted to have higher accuracy is transferred from the FHA 200 to the O-RU 300. Therefore, even when accuracy of the synchronization signal is low, synchronization accuracy in the O-RU 300 can be enhanced.

In addition, the FHA 200 can change the synchronization accuracy information, based on the synchronization signal adjusted using the reference signal. Accordingly, the synchronization signal with adjusted timing has synchronization accuracy information suitable for the adjusted timing, and thus subsequent control processing can be more appropriately executed. In contrast, according to the configuration in which the synchronization accuracy information is changed to a value indicating that the synchronization accuracy is lower than actual synchronization accuracy, operation related to synchronization in the O-RU 300 can be more appropriately inspected.

### <<2.4. Example Alterations>>

The first example embodiment described above may be modified in various manners. Specific examples of modification modes will be illustrated below. The above-described example embodiment and any two or more modes selected from the following examples may be combined as appropriate as far as there is no inconsistency.

The time signal source (synchronization source) according to the first example embodiment is a GNSS signal. However, the FHA 200 can use any time signal source. For example, an atomic clock may be used as the time signal source.

### <<3. Second Example Embodiment>>

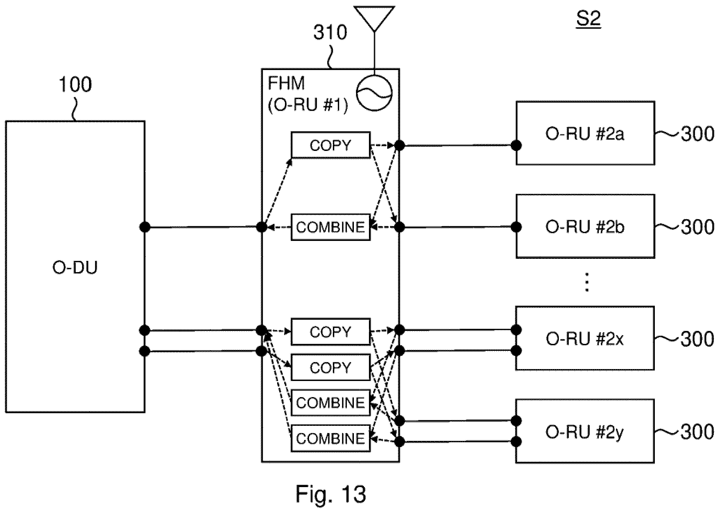

Next, with reference to Fig. 13 to Fig. 21, a second example embodiment of the present invention will be described.

### <<3.1. Configuration of Communication System S2>>

Fig. 13 is an explanatory diagram illustrating a schematic configuration of a communication system S2 according to the second example embodiment. As illustrated in Fig. 13, the communication system S2 includes an O-DU 100, a Fronthaul Multiplexer (FHM) 310, and a plurality of O-RUs 300. The radio access network R according to the second example embodiment includes the communication system S2, but need not include the FHA 200 described in the first example embodiment.

The FHM 310 is a type of O-RU 300, and can function similarly to the O-RU 300. The FHM 310 conforms to technical specifications of the 3GPP, and also conforms to technical specifications of the O-RAN Alliance. The FHM 310 is connected to the O-DU 100 via the fronthaul FH, and is also connected to other O-RUs 300 via the fronthaul FH. In other words, the FHM 310 may be a fronthaul relay apparatus, a fronthaul relay node, or a fronthaul relay station for the O-DU 100 and the plurality of O-RUs 300, or an intermediate node (radio node) between the O-DU 100 and each of the plurality of O-RUs 300. The FHM 310 may or may not have a function to perform radio communication with the UE 400.

The FHM 310 can copy a downlink signal (signal from the O-DU 100 to the O-RUs 300 (FHM 310)) on each plane, and transmit the same downlink signal to the plurality of O-RUs 300. The FHM 310 can combine uplink signals (signals from the O-RUs 300 to the O-DU 100) on each plane from the plurality of O-RUs 300. Note that the FHM 310 may simply combine uplink signals from the plurality of O-RUs 300 (for example, adding and averaging), or may selectively combine the uplink signals (for example, selecting some of the signals, or combining a plurality of signals with weights).

As described above, owing to the presence of the FHM 310, the plurality of O-RUs 300 can transmit and receive a common radio signal. As a result, the plurality of O-RUs 300 can form a single logic cell. The above-described logic cell may also be referred to as a shared cell.

The FHM 310 can transmit the second synchronization signal to the O-RUs 300, based on the first synchronization signal received from the O-DU 100. Similarly to the first example embodiment, each of the first synchronization signal and the second synchronization signal may be a PTP signal in conformity to recommendations of IEEE 1588, may be a SyncE signal in conformity to recommendations of ITU-T G.8260, or may be a synchronization signal in conformity to other specifications and standards.

The FHM 310 may have only a PTP function, may have only a SyncE function, or may have both of the PTP function and the SyncE function. In other words, the FHM 310 has one or more types of certain synchronization functions.

Regarding synchronization processing (for example, PTP processing and/or SyncE processing) on the S plane, the O-DU 100 functions as a master (upper node, control node) for the FHM 310 being a slave (lower node, controlled node). Similarly, the FHM 310 functions as a master for the O-RU 300 being a slave.

The protocol stack and the topology of the S plane in the communication system S2 according to the second example embodiment are configured similarly to the protocol stack and the topology of the S plane in the communication system S1 according to the first example embodiment described with reference to Fig. 3 to Fig. 6.

### <<3.2. Configuration of FHM 310>>

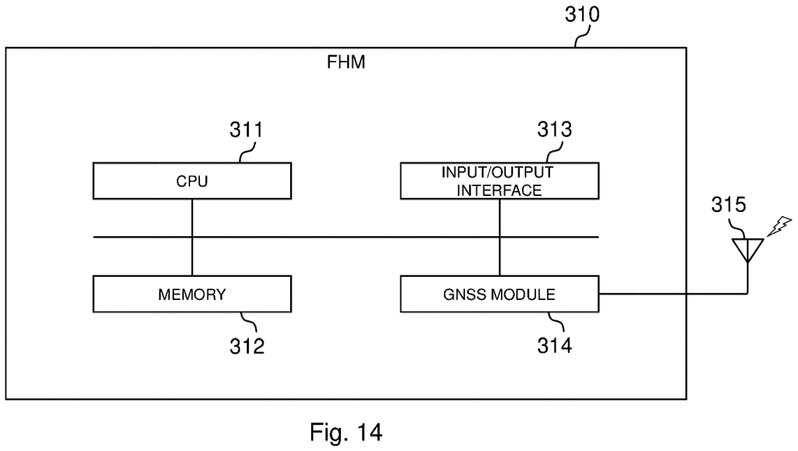

Fig. 14 is a block diagram illustrating a schematic hardware configuration of the FHM 310 according to the second example embodiment. As illustrated in Fig. 14, the FHM 310 includes a CPU 311, a memory 312, an input/output interface 313, a GNSS module 314, and an antenna 315. The above-described elements provided in the FHM 310 are connected to each other with an internal bus. Note that the FHM 310 may include a hardware element other than the elements illustrated in Fig. 14. The FHM 310 need not include the input/output interface 313.

The CPU 311, the memory 312, the input/output interface 313, the GNSS module 314, and the antenna 315 of the FHM 310 may be configured similarly to the CPU 201, the memory 202, the input/output interface 203, the GNSS module 204, and the antenna 205 of the FHA 200 according to the first example embodiment.

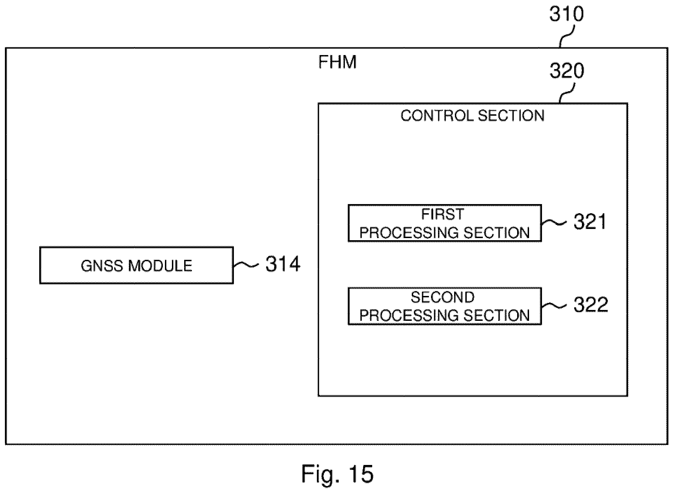

Fig. 15 is a block diagram illustrating a schematic functional configuration of the FHM 310 according to the second example embodiment. As illustrated in Fig. 15, the FHM 310 includes a control section 320 including a first processing section 321 and a second processing section 322. Similarly to the first example embodiment, the GNSS module 314 supplies a time signal to the control section 320. The control section 320, the first processing section 321, and the second processing section 322 are each a function block that is implemented when the CPU 311 executes a program stored in the memory 312. Note that the control section 320 may further include a constituent element other than the above-described function blocks. In other words, the control section 320 can execute operations other than the operations of the above-described function blocks.

The above-described function blocks (the control section 320, the first processing section 321, and the second processing section 322) may be implemented by a semiconductor chip by means of hardware. In other words, the above-described function blocks may be implemented by software, or may be implemented by hardware.

The control section 320, the first processing section 321, and the second processing section 322 of the FHM 310 may be configured similarly to the control section 210, the first processing section 211, and the second processing section 212 of the FHA 200 according to the first example embodiment.

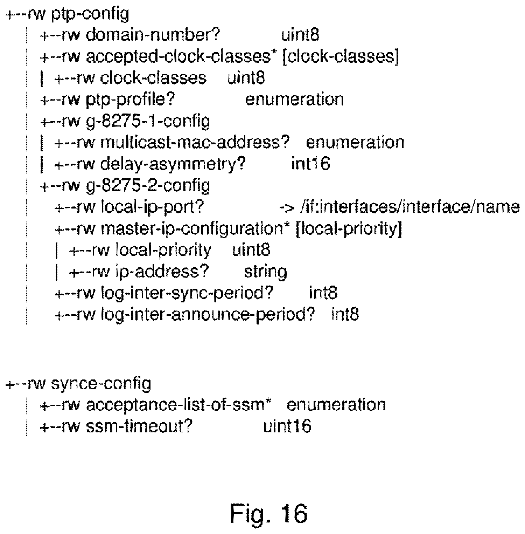

Fig. 16 is an explanatory diagram illustrating a PTP configuration and a SyncE configuration stored in the FHM 310 according to the second example embodiment. Master configuration parameters illustrated in Fig. 16 conform to Reference Literature 2 (in particular, D.4.1 o-ran-sync.yang Module). The FHM 310 functions as a master, and thus includes the master configuration parameters illustrated in Fig. 16. The above-described master configuration parameters are, for example, stored in the memory 312.

### <<3.3. Operation Examples>>

### <<3.3.1. First Operation Example>>

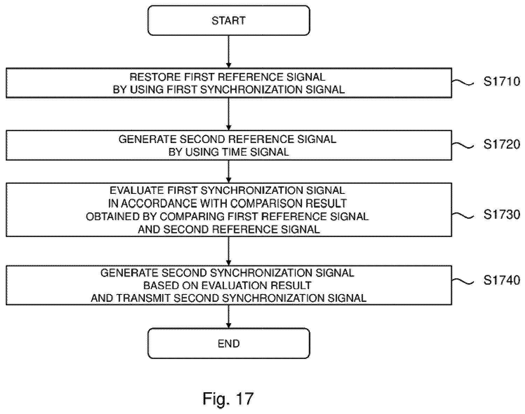

Fig. 17 is a flowchart illustrating a first operation example in the FHM 310 according to the second example embodiment. Operations of Steps S1710 to S1730 are similar to the operations (Fig. 9) of the first operation example in the FHA 200 according to the first example embodiment.

In Step S1740, the second processing section 322 of the FHM 310 generates a plurality of second synchronization signals, based on an evaluation result obtained by evaluating the first synchronization signal, and transmits the plurality of second synchronization signals to the plurality of O-RUs 300 (second nodes), respectively.

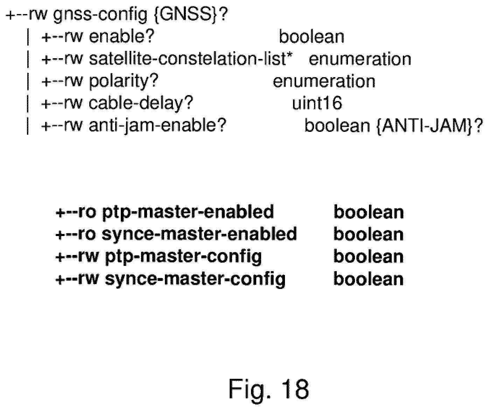

Fig. 18 is an explanatory diagram illustrating a GNSS configuration stored in the FHM 310 executing the first operation example. GNSS parameters illustrated in Fig. 17 conform to Reference Literature 2 (in particular, D.4.1 o-ran-sync.yang Module), and includes new configuration items (part in in bold type in the figure) relating to a GNSS signal. The GNSS parameters are, for example, stored in the memory 312.

"ptp-master-enabled" is a capability parameter indicating whether or not the FHM 310 is capable of being a PTP master based on a GNSS signal. "synce-master-enabled" is a capability parameter indicating whether or not the FHM 310 is capable of being a SyncE master based on a GNSS signal. The above-described capability parameters depend on functions of the FHM 310, and are thus configured for reading only. The above-described capability parameters are capability information indicating whether or not a synchronization signal can be generated based on a reference signal generated using a time signal.

"ptp-master-config" is a configuration parameter indicating whether or not the FHM 310 is to function as a PTP master based on a GNSS signal. "synce-master-config" is a configuration parameter indicating whether or not the FHM 310 is to function as a SyncE master based on a GNSS signal. The above-described configuration parameters are dynamically configured for the FHM 310 via the M plane, and are thus changeably configured. The above-described configuration parameters are configuration information indicating whether or not a synchronization signal is to be generated based on a reference signal generated using a time signal.

According to the configuration described above, the FHM 310 being a radio node can appropriately execute processing relating to synchronization based on a synchronization signal. More specifically, the FHM 310 can generate the second synchronization signal having higher accuracy, based on the evaluation result of the first synchronization signal evaluated in accordance with the comparison result between the first synchronization signal restored using the first synchronization signal transmitted from the O-DU 100 and the second reference signal generated using the time signal supplied from the GNSS module 314 based on the GNSS signal, and transmit the second synchronization signal to the plurality of O-RUs 300. Therefore, even when accuracy of the first synchronization signal is low, synchronization accuracy in the plurality of O-RUs 300 can be enhanced.

### <<3.3.2. Second Operation Example>>

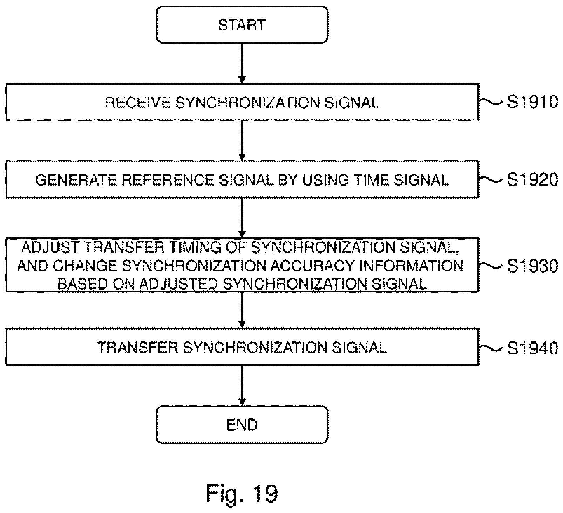

Fig. 19 is a flowchart illustrating a second operation example in the FHM 310 according to the second example embodiment. Operations of Steps S1910 to S1930 are similar to the operations (Fig. 11) of the second operation example in the FHA 200 according to the first example embodiment.

In Step S1940, the second processing section 322 transfers the synchronization signal adjusted based on the timing indicated by the reference signal in Step S1930 to each of the plurality of O-RUs 300 (second nodes).

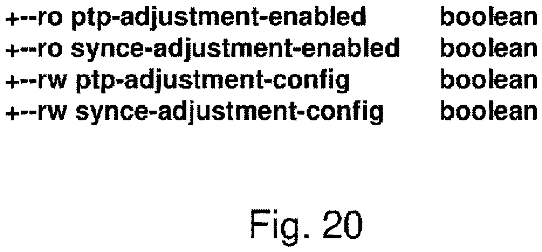

Fig. 20 is an explanatory diagram illustrating an adjustment configuration stored in the FHM 310 executing the second operation example. Adjustment parameters illustrated in Fig. 20 are, for example, stored in the memory 312.

"ptp-adjustment-enabled" is a capability parameter indicating whether or not the FHM 310 is capable of adjusting a PTP signal based on a GNSS signal. "synce-adjustment-enabled" is a capability parameter indicating whether or not the FHM 310 is capable of adjusting a PTP signal based on a GNSS signal. The above-described capability parameters depend on functions of the FHM 310, and are thus configured for reading only. The above-described capability parameters are capability information indicating whether or not a synchronization signal can be adjusted by using a reference signal generated using a time signal.

"ptp-adjustment-config" is a configuration parameter indicating whether or not the FHM 310 is to adjust a PTP signal based on a GNSS signal. "synce-adjustment-config" is a configuration parameter indicating whether or not the FHM 310 is to adjust a SyncE PTP signal based on a GNSS signal. The above-described configuration parameters are dynamically configured for the FHM 310 via the M plane, and are thus changeably configured. The above-described configuration parameters are configuration information indicating whether or not a synchronization signal is to be adjusted by using a reference signal generated using a time signal.

According to the configuration described above, the FHM 310 being a radio node can appropriately execute processing relating to synchronization based on a synchronization signal. More specifically, the FHM 310 can adjust the transfer timing of the synchronization signal transmitted from the O-DU 100, based on the timing of the reference signal generated using the time signal supplied from the GNSS module 314 based on the GNSS signal. As a result, the synchronization signal adjusted to have higher accuracy is transferred from the FHM 310 to the plurality of O-RUs 300. Therefore, even when accuracy of the synchronization signal is low, synchronization accuracy in the plurality of O-RUs 300 can be enhanced. Regarding the synchronization accuracy information as well, technical effects similar to those of the first example embodiment are exerted.

### <<3.4. Example Alterations>>

The second example embodiment described above may be modified in various manners. Specific examples of modification modes will be illustrated below. The above-described example embodiment and any two or more modes selected from the following examples may be combined as appropriate as far as there is no inconsistency.

The time signal source (synchronization source) according to the second example embodiment is a GNSS signal. However, similarly to the first example embodiment, the FHM 310 can use any time signal source. For example, an atomic clock may be used as the time signal source.

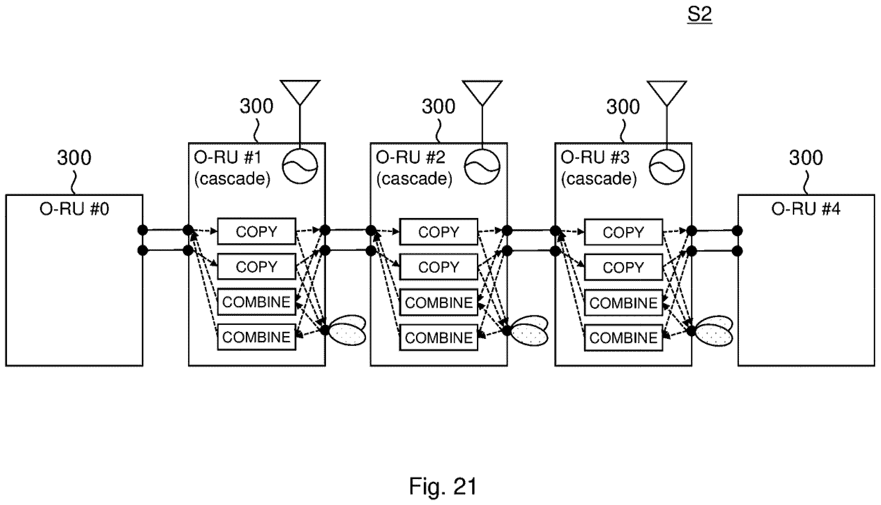

In the second example embodiment, a plurality of O-RUs 300 are deployed in parallel using the FHM 310. However, as illustrated in Fig. 21, a plurality of O-RUs 300 may be deployed in series. In other words, a cascade configuration may be applied to the communication system S2. In the cascade configuration, the plurality of O-RUs 300 each includes a radio communication function, and form one logic cell (shared cell).

Among the plurality of O-RUs 300, a cascade O-RU 300 (radio node, #1 to # 3 in the figure) with an O-RU 300 (south node) in the subsequent stage copies a downlink signal from an O-RU 300 (north node) in the preceding stage and transmits the downlink signal to the O-RU 300 in the subsequent stage, and further wirelessly transmits the same downlink signal to the UE 400 voluntarily. The cascade O-RU 300 (radio node) combines an uplink signal from the O-RU 300 in the subsequent stage and an uplink signal wirelessly received from the UE 400 voluntarily.

Each cascade O-RU 300 (radio node) may be configured similarly to the FHM 310 according to the second example embodiment. In other words, similarly to the first operation example, the cascade O-RU 300 (radio node) may function as a master (PTP master, SyncE master) for the O-RU 300 in the subsequent stage. Similarly to the second operation example, the cascade O-RU 300 (radio node) may transfer a synchronization signal adjusted based on a reference signal to the O-RU 300 in the subsequent stage.

When a plurality of cascade O-RUs 300 (radio nodes) are included in the communication system S2, all of the cascade O-RUs 300 may be configured similarly to the FHM 310, or only a part of the cascade O-RUs 300 may be configured similarly to the FHM 310.

### <<4. Third Example Embodiment>>

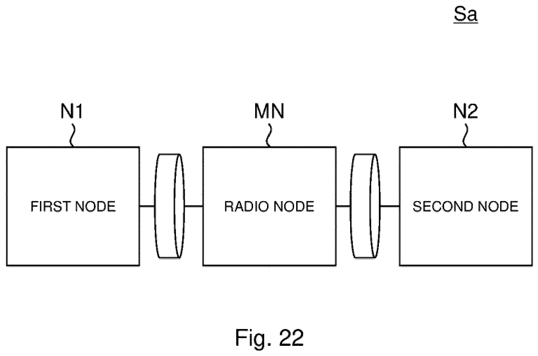

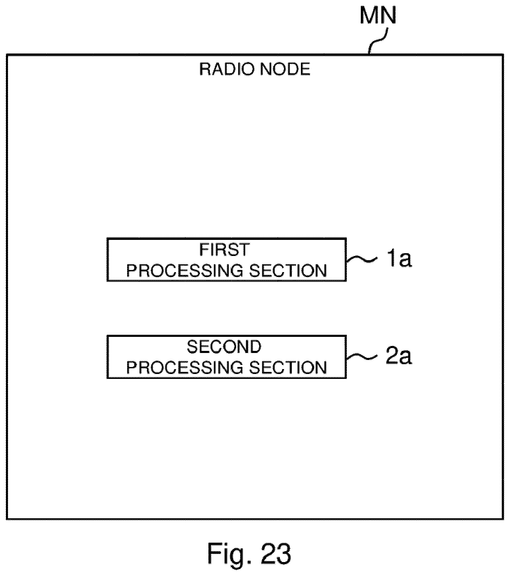

Next, with reference to Fig. 22 and Fig. 23, a third example embodiment of the present invention will be described. The first example embodiment and the second example embodiment described above are concrete example embodiments, whereas the third example embodiment is a more generalized example embodiment. According to the third example embodiment to be described below, technical effects similar to those of the first example embodiment and the second example embodiment are exerted.

### <<4.1. Configuration of Communication System Sa>>

Fig. 22 is a block diagram illustrating a schematic configuration of a communication system Sa according to the third example embodiment of the present invention. The communication system Sa includes a first node N1 that transmits a synchronization signal, a radio node MN, and a second node N2 deployed in the subsequent stage of the radio node MN The communication system Sa may include a plurality of first nodes N1, a plurality of radio nodes MN, and a plurality of second nodes N2.

### <<4.2. Configuration of Radio Node MN>>

Fig. 23 is a block diagram illustrating a schematic configuration of the radio node MN according to the third example embodiment of the present invention. The radio node MN includes a first processing section 1a and a second processing section 2a.

The first processing section 1a receives a synchronization signal transmitted from the first node N1. The second processing section 2a generates a reference signal by using a time signal acquired from a time signal source, and executes processing relating to synchronization in accordance with a comparison result based on the synchronization signal and the reference signal.

### - Relationship with First Example Embodiment

As an example, the radio node MN according to the third example embodiment may execute operation of the FHA 200 according to the first example embodiment. In the case described above, description regarding the first example embodiment (including its example alterations) can be applied to the third example embodiment as well.

As an example, the radio node MN according to the third example embodiment may execute operation of the FHM 310 according to the second example embodiment. Similarly, as an example, the radio node MN according to the third example embodiment may execute operation of the cascade O-RU 300 according to the example alteration of the second example embodiment. In the case described above, description regarding the second example embodiment (including its example alterations) can be applied to the third example embodiment as well.

The third example embodiment is not limited to the examples described above.

### <<5. Other Example Embodiments>>

Descriptions have been given above of the example embodiments of the present invention. However, the present invention is not limited to these example embodiments. It should be understood by those of ordinary skill in the art that these example embodiments are merely examples and that various alterations are possible without departing from the scope and the spirit of the present invention.

For example, the steps in the processing described in the Specification may not necessarily be executed in time series in the order described in the flowcharts. For example, the steps in the processing may be executed in order different from that described in the flowcharts or may be executed in parallel. Some of the steps in the processing may be deleted, or more steps may be added to the processing.

An apparatus including constituent elements (e.g., the first processing section and/or the second processing section) of the FHA 200, the FHM 310, and the cascade O-RU 300 (radio node) described in the Specification (e.g., one or more apparatuses (or units) among a plurality of apparatuses (or units) constituting any one of the entities described above, or a module for one of the plurality of apparatuses (or units)) may be provided.

Moreover, methods including processing of the constituent elements may be provided, and programs for causing a processor to execute processing of the constituent elements may be provided. Moreover, non-transitory computer readable recording media (non-transitory computer readable media) having recorded thereon the programs may be provided. It is apparent that such apparatuses, modules, methods, programs, and non-transitory computer readable recording media are also included in the present invention.

The whole or part of the example embodiments disclosed above can be described as in the following supplementary notes, but are not limited to the following.

### (Supplementary Note 1)

A radio node comprising:
a first processing section configured to receive a synchronization signal transmitted from a first node; and
a second processing section configured to generate a reference signal by using a time signal acquired from a time signal source, and execute processing relating to synchronization in accordance with a comparison result based on the synchronization signal and the reference signal.

### (Supplementary Note 2)

The radio node according to supplementary note 1, wherein
the first processing section is configured to restore a first reference signal by using the synchronization signal transmitted from the first node,
the reference signal generated by the second processing section is a second reference signal different from the first reference signal, and
the second processing section is configured to evaluate a first synchronization signal in accordance with a comparison result of the first reference signal and the second reference signal, the first synchronization signal being the synchronization signal received by the first processing section.

### (Supplementary Note 3)

The radio node according to supplementary note 2, wherein
the second processing section is configured to generate a second synchronization signal, based on an evaluation result of the first synchronization signal, and transmit the second synchronization signal to a second node.

### (Supplementary Note 4)

The radio node according to supplementary note 3, wherein
the second processing section is configured to generate the second synchronization signal by using another signal received from the first node in addition to the evaluation result.

### (Supplementary Note 5)

The radio node according to supplementary note 4, wherein
the another signal is a C plane signal and/or a U plane signal.

### (Supplementary Note 6)

The radio node according to any one of supplementary notes 3 to 5, wherein
the evaluation result is information indicating fluctuation and/or validity of the first synchronization signal.

### (Supplementary Note 7)

The radio node according to any one of supplementary notes 3 to 6, comprising
a memory configured to store capability information indicating whether or not the second synchronization signal can be generated based on the second reference signal generated using the time signal, and configuration information indicating whether or not the second synchronization signal is to be generated based on the second reference signal generated using the time signal.

### (Supplementary Note 8)

The radio node according to supplementary note 1, wherein
the second processing section is configured to transfer the synchronization signal received by the first processing section to a second node, based on timing indicated by the reference signal generated using the time signal.

### (Supplementary Note 9)

The radio node according to supplementary note 8, wherein
the synchronization signal includes synchronization accuracy information indicating synchronization accuracy of the synchronization signal, and
the second processing section is configured to change the synchronization accuracy information, based on the synchronization signal adjusted using the reference signal.

### (Supplementary Note 10)

The radio node according to supplementary note 9, wherein
the second processing section is configured to, when the second processing section performs an adjustment by using the reference signal to improve the synchronization accuracy of the synchronization signal, change the synchronization accuracy information to a value indicating that the synchronization accuracy is higher.

### (Supplementary Note 11)

The radio node according to supplementary note 9, wherein
the second processing section is configured to change the synchronization accuracy information to a value indicating that the synchronization accuracy is lower than actual synchronization accuracy of the synchronization signal.

### (Supplementary Note 12)

The radio node according to any one of supplementary notes 9 to 11, wherein
the synchronization accuracy information is a clock class in a Precision Time Protocol (PTP) and/or a Synchronous Status Message (SSM) in Synchronous Ethernet (SyncE).

### (Supplementary Note 13)

The radio node according to any one of supplementary notes 8 to 12, further comprising
a memory configured to store capability information indicating whether or not the synchronization signal can be adjusted by using the reference signal generated using the time signal, and configuration information indicating whether or not the synchronization signal is to be adjusted by using the reference signal generated using the time signal.

### (Supplementary Note 14)

The radio node according to any one of supplementary notes 1 to 13, wherein
the time signal source is a Global Navigation Satellite System (GNSS) signal.

### (Supplementary Note 15)

The radio node according to any one of supplementary notes 1 to 13, wherein
the time signal source is an atomic clock.

### (Supplementary Note 16)

The radio node according to any one of supplementary notes 1 to 15, wherein
the radio node is a Fronthaul Analyzer (FHA) configured to analyze a signal transmitted and received by another node.

### (Supplementary Note 17)

The radio node according to any one of supplementary notes 1 to 15, wherein
the radio node is a Fronthaul Multiplexer (FHM) connected to a plurality of second nodes in parallel.

### (Supplementary Note 18)

The radio node according to any one of supplementary notes 1 to 15, wherein
the radio node is one of a plurality of second nodes connected in series, and
the radio node is deployed between two second nodes among the plurality of second nodes, the two second nodes being adjacent to the radio node.

### (Supplementary Note 19)

A communication system comprising:
a first node configured to transmit a synchronization signal;
a radio node including a first processing section configured to receive the synchronization signal, and a second processing section configured to generate a reference signal by using a time signal acquired from a time signal source, and execute processing relating to synchronization in accordance with a comparison result based on the synchronization signal and the reference signal; and
a second node configured to be deployed in a subsequent stage of the radio node.

### (Supplementary Note 20)

A method comprising:
receiving a synchronization signal transmitted from a first node; and
generating a reference signal by using a time signal acquired from a time signal source, and executing processing relating to synchronization in accordance with a comparison result based on the synchronization signal and the reference signal.

### (Supplementary Note 21)

A program causing a computer to function as a radio node, wherein
the radio node includes
a first processing section configured to receive a synchronization signal transmitted from a first node, and
a second processing section configured to generate a reference signal by using a time signal acquired from a time signal source, and execute processing relating to synchronization in accordance with a comparison result based on the synchronization signal and the reference signal.

### (Supplementary Note 22)

A non-transitory computer readable recording medium recording a program thereon, the program causing a computer to function as a radio node, wherein
the radio node includes
a first processing section configured to receive a synchronization signal transmitted from a first node, and
a second processing section configured to generate a reference signal by using a time signal acquired from a time signal source, and execute processing relating to synchronization in accordance with a comparison result based on the synchronization signal and the reference signal.

This application claims priority based on JP Application No. 2020-145918 filed on August 31, 2020, the entire disclosure of which is incorporated herein.

### Industrial Applicability

Processing relating to synchronization based on a synchronization signal can be appropriately executed.

### Reference Signs List

- 100: O-DU (First Node)
- 200: FHA (Radio Node)
- 211: First Processing Section
- 212: Second Processing Section
- 300: O-RU (Second Node, Radio Node)
- 310: FHM (Radio Node)

## Claims

1. A radio node comprising:
a first processing section configured to receive a synchronization signal transmitted from a first node; and
a second processing section configured to generate a reference signal by using a time signal acquired from a time signal source, and execute processing relating to synchronization in accordance with a comparison result based on the synchronization signal and the reference signal.

2. The radio node according to claim 1, wherein
the first processing section is configured to restore a first reference signal by using the synchronization signal transmitted from the first node,
the reference signal generated by the second processing section is a second reference signal different from the first reference signal, and
the second processing section is configured to evaluate a first synchronization signal in accordance with a comparison result of the first reference signal and the second reference signal, the first synchronization signal being the synchronization signal received by the first processing section.

3. The radio node according to claim 2, wherein
the second processing section is configured to generate a second synchronization signal, based on an evaluation result of the first synchronization signal, and transmit the second synchronization signal to a second node.

4. The radio node according to claim 3, wherein
the second processing section is configured to generate the second synchronization signal by using another signal received from the first node in addition to the evaluation result.

5. The radio node according to claim 4, wherein
the another signal is a C plane signal and/or a U plane signal.

6. The radio node according to any one of claims 3 to 5, wherein
the evaluation result is information indicating fluctuation and/or validity of the first synchronization signal.

7. The radio node according to any one of claims 3 to 6, comprising
a memory configured to store capability information indicating whether or not the second synchronization signal can be generated based on the second reference signal generated using the time signal, and configuration information indicating whether or not the second synchronization signal is to be generated based on the second reference signal generated using the time signal.

8. The radio node according to claim 1, wherein
the second processing section is configured to transfer the synchronization signal received by the first processing section to a second node, based on timing indicated by the reference signal generated using the time signal.

9. The radio node according to claim 8, wherein
the synchronization signal includes synchronization accuracy information indicating synchronization accuracy of the synchronization signal, and
the second processing section is configured to change the synchronization accuracy information, based on the synchronization signal adjusted using the reference signal.

10. The radio node according to claim 9, wherein
the second processing section is configured to, when the second processing section performs an adjustment by using the reference signal to improve the synchronization accuracy of the synchronization signal, change the synchronization accuracy information to a value indicating that the synchronization accuracy is higher.

11. The radio node according to claim 9, wherein
the second processing section is configured to change the synchronization accuracy information to a value indicating that the synchronization accuracy is lower than actual synchronization accuracy of the synchronization signal.

12. The radio node according to any one of claims 9 to 11, wherein
the synchronization accuracy information is a clock class in a Precision Time Protocol (PTP) and/or a Synchronous Status Message (SSM) in Synchronous Ethernet (SyncE).

13. The radio node according to any one of claims 8 to 12, further comprising
a memory configured to store capability information indicating whether or not the synchronization signal can be adjusted by using the reference signal generated using the time signal, and configuration information indicating whether or not the synchronization signal is to be adjusted by using the reference signal generated using the time signal.

14. The radio node according to any one of claims 1 to 13, wherein
the time signal source is a Global Navigation Satellite System (GNSS) signal.

15. The radio node according to any one of claims 1 to 13, wherein
the time signal source is an atomic clock.

16. The radio node according to any one of claims 1 to 15, wherein
the radio node is a Fronthaul Analyzer (FHA) configured to analyze a signal transmitted and received by another node.

17. The radio node according to any one of claims 1 to 15, wherein
the radio node is a Fronthaul Multiplexer (FHM) connected to a plurality of second nodes in parallel.

18. The radio node according to any one of claims 1 to 15, wherein
the radio node is one of a plurality of second nodes connected in series, and
the radio node is deployed between two second nodes among the plurality of second nodes, the two second nodes being adjacent to the radio node.

19. A communication system comprising:
a first node configured to transmit a synchronization signal;
a radio node including a first processing section configured to receive the synchronization signal, and a second processing section configured to generate a reference signal by using a time signal acquired from a time signal source, and execute processing relating to synchronization in accordance with a comparison result based on the synchronization signal and the reference signal; and
a second node configured to be deployed in a subsequent stage of the radio node.

20. A method comprising:
receiving a synchronization signal transmitted from a first node; and
generating a reference signal by using a time signal acquired from a time signal source, and executing processing relating to synchronization in accordance with a comparison result based on the synchronization signal and the reference signal.

21. A program causing a computer to function as a radio node, wherein
the radio node includes
a first processing section configured to receive a synchronization signal transmitted from a first node, and
a second processing section configured to generate a reference signal by using a time signal acquired from a time signal source, and execute processing relating to synchronization in accordance with a comparison result based on the synchronization signal and the reference signal.

22. A non-transitory computer readable recording medium recording a program thereon, the program causing a computer to function as a radio node, wherein
the radio node includes
a first processing section configured to receive a synchronization signal transmitted from a first node, and
a second processing section configured to generate a reference signal by using a time signal acquired from a time signal source, and execute processing relating to synchronization in accordance with a comparison result based on the synchronization signal and the reference signal.
